(19)

Europäisches
Patentamt
European
Patent Office
Office européen
des brevets

(11)    **EP 2 477 407 B1**

(12)    **EUROPEAN PATENT SPECIFICATION**

(45) Date of publication and mention
of the grant of the patent:
**21.03.2018   Bulletin 2018/12**

(51) Int Cl.:
***H04N 13/00*** *(2018.01)*

(21) Application number: **11000290.4**

(22) Date of filing: **15.01.2011**

(54) **A method and a system for determining a video frame type**

Verfahren und System zur Bestimmung einer Videorahmenart

Procédé et système pour déterminer un type de cadre vidéo

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.07.2012   Bulletin 2012/29**

(73) Proprietor: **Advanced Digital Broadcast S.A.
1292 Chambesy (CH)**

(72) Inventor: **Hrebien, Maciej
65-119 Zielona Gora (PL)**

(74) Representative: **Kancelaria Eupatent.pl Sp. z.o.o
Ul. Kilinskiego 185
90-348 Lodz (PL)**

(56) References cited:
**US-A1- 2010 182 404**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to determining video frame type, in particular distinguishing between a two-dimensional (2D) and three-dimensional (3D) video frames.

Stereoscopic video displays can be used to display both 2D and 3D video signals, by processing the frames of the signals depending on the type of signal. The type of the signal can be specified manually by the user, which can be troublesome for inexperienced users. The type of signal can be also specified by supplementary data included in the signal itself or by a supplementary signal, which requires the video display unit to be able to decode and recognize the supplementary data or the supplementary signal.

A US patent application US2009/0009508 presents an apparatus and a method for driving a 2D/3D switchable display, which includes an image mode determination unit determining whether input image signals of continuous frames are in a 2D mode or 3D mode. The 3D mode is recognized by determining a syntax indicating a stereo or a multiview image included in the header information of the input image signal. Alternatively, the image mode can be determined based on the presence of a stereo sync signal. Therefore, the mode determination requires data or signals supplementary to the basic image data.

A PCT patent application WO2010/014973 presents a method and an apparatus for encoding or tagging a video frame which provide a way to indicate, to a receiver, whether the video content is 3-D content or 2-D content, by replacing lines of at least one video frame in a 3-D content with a specific color or pattern. Therefore, the method is useful only for receivers, which are able to recognize the specific color or patterns as an indication of a 3-D content.

In case the display lacks the functionality of decoding supplementary data included in the signal or is not able to decode supplementary signals describing the video type, or the video signal contains only basic image contents without the image type indicated, the signal must be recognized in an alternative way.

A US patent application US2010/182404 A1 discloses a method for determining a video frame type, comprising the steps of receiving a video frame, separating the video frame in a first half and a second half, comparing the two halves and classifying the frame as a stereoscopic frame if the correlation between the two halves exceeds a threshold and as a monoscopic frame otherwise.

The aim of the present invention is to provide an improved method for determining the video frame type by analyzing video signals having no or unknown indication of video frame type.

The object of the invention is a computer-implemented method and system for determining a video frame type, according to the appended claims.

The present invention will be shown by means of an exemplary embodiment on a drawing, in which:

Figs. 1A-1D show examples of typical 2D video frames.
Figs. 2A-2H show examples of typical 3D video frames of an Left-Right (LR) type.
Figs. 3A-3H show examples of typical 3D video frames of a Top-Bottom (TB) type.
Fig. 4 shows the common non-active image regions of a video frame.
Fig. 5 shows the structure of a system for determining video frame type.
Fig. 6 shows the procedure of operation of a frame compactor.
Fig. 7 shows the procedure of operation of a frame type detector.
Fig. 8 shows an exemplary LR-type 3D frame
Fig. 9 shows an exemplary features list for the left and right half of the frame of Fig. 8.
Fig. 10 presents exemplary plot of values of the accumulation matrix for an exemplary stereoscopic frame.
Fig. 11 presents an exemplary mono frame.
Fig. 12 presents an exemplary plot of the accumulation matrix for an exemplary mono frame.
Fig. 13 presents an exemplary embodiment of the frame type detector.

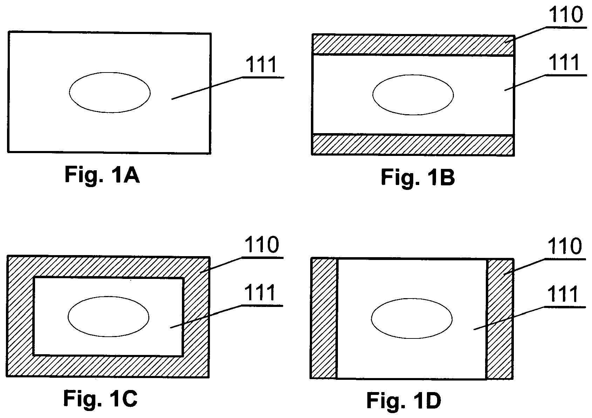

Figs. 1A-1D show examples of typical 2D video frames. The frame may comprise only an active image region 111 as shown in Fig. 1A. Alternatively, the 2D frame may further comprise a non-active image region 110, such as bars of a uniform color, e.g. black, at the top and bottom edges of the frame as shown in Fig. 1B or bars at the top, bottom, left and right edges of the frame as shown in Fig. 1C or bars at the left and right edges of the frame as shown in Fig. 1D.

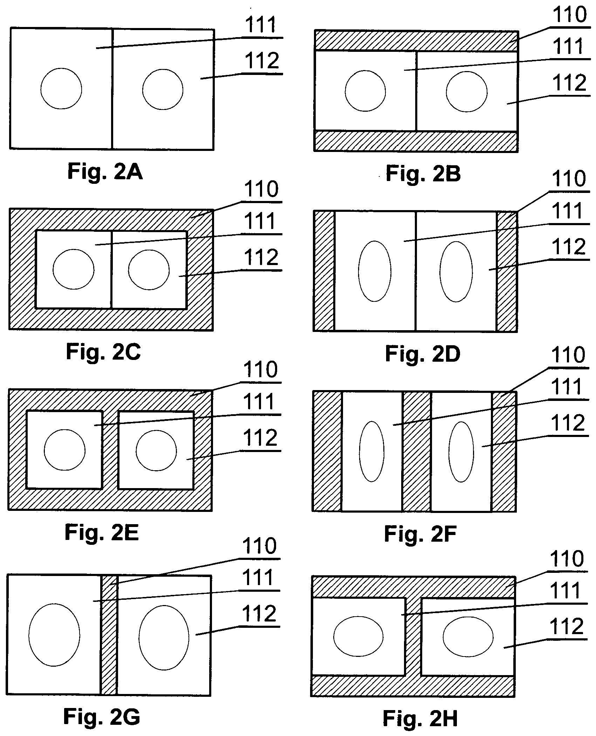

Figs. 2A-2H show examples of typical 3D video frames of a Left-Right (LR) type. Such frame, as shown in Fig. 2A, comprises two active image regions 111, 112, which define the content to be displayed for the left and right eye. The active regions 111, 112 may be scaled-down in the horizontal direction in order to fit into dimensions of a standardized 2D frame. A 3D frame may also contain non-active image regions 110, such as bars of a uniform color, e.g. black, at the top and bottom edges of the frame as shown in Fig. 2B, at the top, bottom, left and right edges of the frame as shown in Fig. 2C, at the left and right edges of the frame as shown in Fig. 2D, at the top, bottom, left and right edges of the frame and between the active regions as shown in Fig. 2E, at the left and right edges of the frame and between the active regions as shown in Fig. 2F, between the active regions as shown in Fig. 2G or at the top and bottom edges of the frame and between the active regions as shown in Fig. 2H.

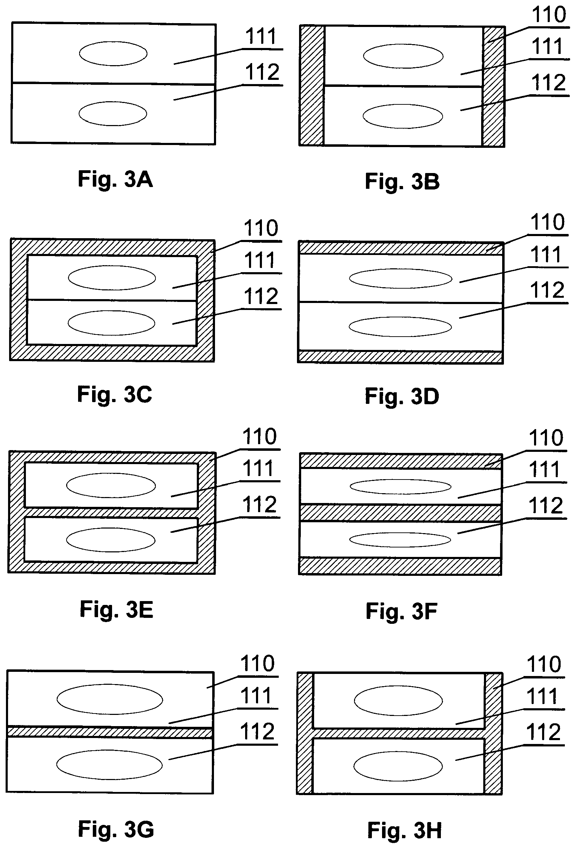

Figs. 3A-3H show examples of typical 3D video frames of a Top-Bottom (TB) type. Such frame, as shown in Fig. 3A, comprises two active image regions 111, 112, which define the content to be displayed for the left (e.g. the top region) and the right (e.g. the bottom region) eye. The active regions 111, 112 may be scaled-down in the vertical direction in order to fit into dimensions of a standard 2D frame. A 3D frame may also contain non-active image regions 110, such as: bars of a uniform color, e.g. black, at the left and right edges of the frame as shown in Fig. 3B, at the top, bottom, left and right edges of the frame as shown in Fig. 3C, at the top and bottom edges of the frame as shown in Fig. 3D, at the top, bottom, left and right edges of the frame and between the active regions as shown in Fig. 3E, at the top and bottom edges of the frame and between the active regions as shown in Fig. 3F, between the active regions as shown in Fig. 3G or at the left and right edges of the frame and between the active regions as shown in Fig. 3H.

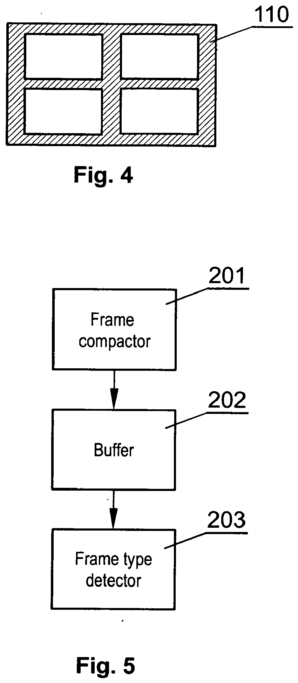

Therefore, for any 2D or 3D video frame, the most probable non-active regions 110 may form bars at the top, bottom, left, right, horizontal centre and vertical centre of the frame, as shown in Fig. 4.

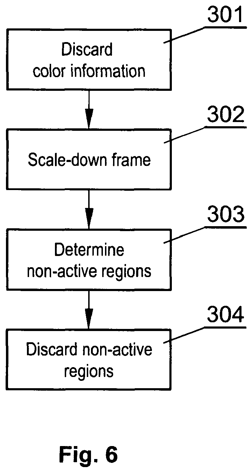

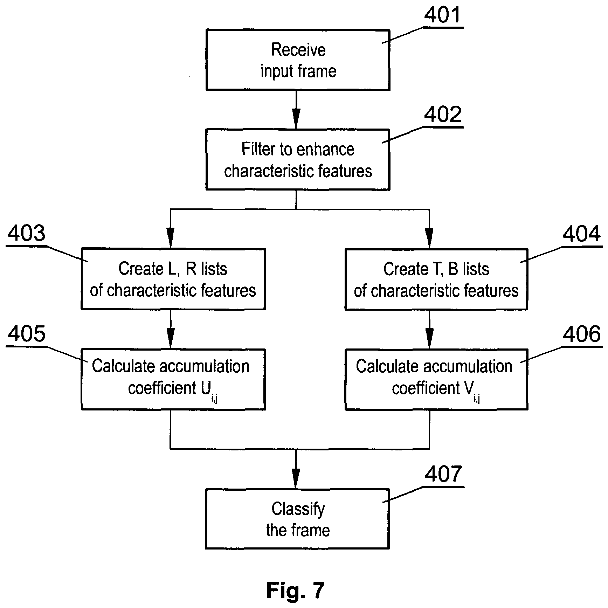

Fig. 5 shows the structure of a system for determining video frame type according to the invention. The system comprises a frame compactor 201 configured to extract from the input video frames data representing an active region and discard the data representing the non-active region of the frame, according to the procedure shown in Fig. 6, and possibly to reduce the amount of data by scaling-down and/or discarding the color information. The reduced frame representation is passed to a buffer 202, from which it is collected by a frame type detector 203 operating according to the procedure shown in Fig. 7 The frame type detector 203 provides an output specifying the type of the frame: that the frame is a 2D or a 3D frame, wherein for 3D frames the detector may indicate the type of frame as an LR frame ($p_{LR}$) or a TB frame ($p_{TB}$). In a simple embodiment, the system may be adapted to distinguish only between mono frames and one type of 3D frames, i.e. LR-type or TB-type frames.

Fig. 6 shows the procedure of operation of the frame compactor 201. In step 301 the color information can be discarded, either by converting the frame contents into a grayscale or selecting contents of only one color channel. Next, in step 302, the received input frame may be reduced for easier analysis, by scaling it down, i.e. reducing the size of the frame. Next, in step 303 the frame is analyzed to detect the non-active regions, preferably in areas indicated in Fig. 4, namely in the bars located at the top, bottom, left, right, horizontal centre and vertical centre of the frame. The contents of the detected non-active regions are discarded in step 304 so as to generate a frame containing only data of active regions, as shown in Fig. 1A, 2A or 3A. The processing of a frame by the frame compactor 201 may be initiated after a change of the video input signal, for example a change of a channel in a television decoder, in order to determine the type of the new signal. Alternatively, the frame compactor 201 may be operated continuously, in order to detect change of type of the received signal, for example to detect a 2D commercial break in a 3D video film. In such a case, the frame compactor 201 may receive the frames with a specific frequency, preferably lower than the frame display rate, such as 2 frames per second, in order to minimize the computational load of the signal receiver.

Fig. 7 shows the procedure of operation of the frame type detector 203. The input frame is received in step 401 as a matrix describing its contents (pixel values). Next, the frame is filtered in step 402 in order to enhance characteristic features of the frame, i.e. the features which can be recognized in a stereo frame and for which a shift between the left-eye frame and the right-eye frame can be measured. Such features are for example corners or edges of objects having a color different than a background color. Various image sharpening, edge detection, contrast enhancement etc. algorithms can be used. For example, all pixels of the image can be filtered with the following algorithm, which enhances the value of pixels which differ from their neighboring left, right, top and bottom pixels and zeroes the pixels which have the same value as their neighboring pixels:

$$\text{filter}(A): B_{i,j} = \text{saturate}(4A_{i,j} - A_{i,j-1} - A_{i,j+1} - A_{i-1,j} - A_{i+1,j})$$

$$\text{saturate}(x) = \begin{cases} 0, & if\ x < 0 \\ 255, & if\ x > 255 \\ x, & otherwise. \end{cases}$$

wherein

  A is the input image matrix
  B is the filtered image matrix
  i,j are horizontal and vertical pixel coordinates

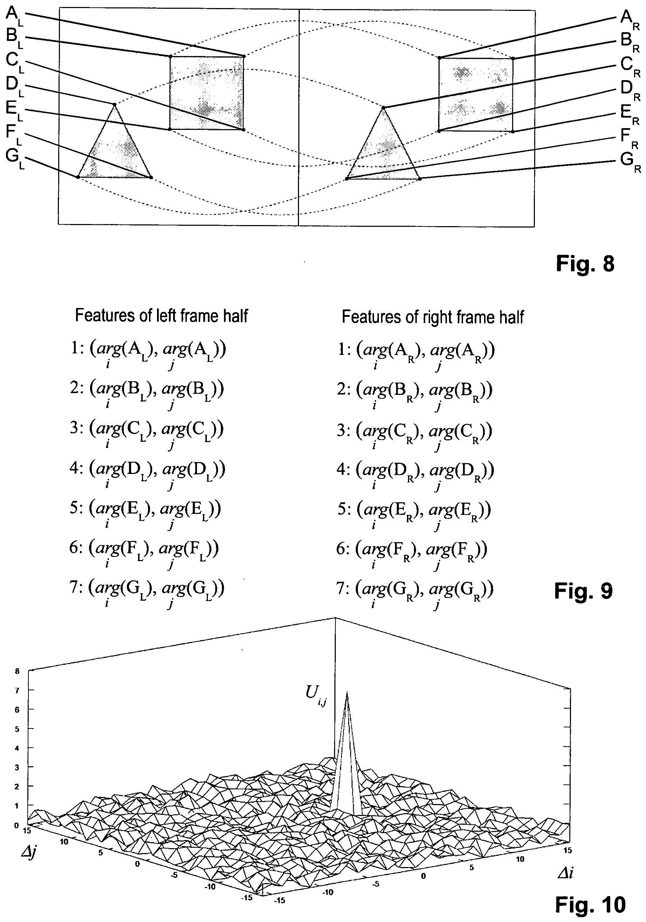

Next, in steps 403, 404 the characteristic features of the filtered image are collected in two sets, each set describing a different half of the filtered image. In step 403 the sets are created for the left and right half of the image in order to distinguish between a mono frame and a LR-type 3D frame, and in step 404 the sets are created for the top and bottom half of the image in order to distinguish between a mono frame and a TB-type 3D frame. Each set comprises coordinates of the individual characteristic features. The characteristic features can be individual pixels of the filtered image having a value higher than a predefined threshold (i.e. the most contrasting pixels of the original image, such as the corners and edges of contrasting objects). Alternatively, a predetermined number of most characteristic features (i.e. having the highest values) can be selected. Furthermore, each set may contain a predetermined number of randomly-selected characteristic features. The characteristic features can be also more complicated geometrical objects, such as lines, figures, areas of pixel concentration etc., detected using dedicated features detection algorithms. An exemplary list of features for the exemplary image shown in fig. 8 is shown in Fig. 9.

The procedure for creating the LR-type list can be summarized by equations:

$$\forall(x_{ij} > \theta) \in \text{filter}(A_{m \times n}):$$

$$L \leftarrow x_{ij}, if(j < n/2)$$

$$R \leftarrow x_{ij}, otherwise$$

wherein

(m x n) is the image size specified as a number of pixels in horizontal and vertical direction
L, R is the characteristic features set for the left and right half of the frame, respectively

The procedure for creating the TB-type list can be summarized by equations:

$$\forall(x_{ij} > \theta) \in \text{filter}(A_{m \times n}):$$

$$T \leftarrow x_{ij}, if(i < m/2)$$

$$B \leftarrow x_{ij}, otherwise$$

wherein

T, B is the characteristic features set for the top and bottom half of the frame, respectively

Fig. 8 shows an exemplary LR-type 3D frame, wherein the right part of the frame corresponds to the left part shifted slightly to the right. Using the filter algorithm described with reference to step 402, the most characteristic features of the images will be identified at the points of the corners of the geometrical figures, as they are mostly distinguishable from their neighboring pixels and less characteristic ones located on the remaining edges of the objects. The corresponding characteristic points on the image halves have been connected with dashed lines (not forming part of the source frame).

Fig. 9 shows an exemplary features list for the left and right half of the frame of Fig. 8. It is noted that the order in which the characteristic features are arranged on both lists is not relevant, as evident from the description of the algorithm of steps 405, 406. For example, the top corner of the triangle of the left half of the frame is the fourth feature ($D_L$) on the left half features list and as the third feature ($C_R$) on the right half features list. Each element of the list (1-7) comprises the i,j coordinates of the characteristic feature.

In step 405 the set for the left frame half is compared with the set for the right frame half according to the algorithm:

$$\forall U_{ij} = 0$$

$$\forall a \in L:$$

$$\forall b \in R:$$

$$\Delta i = \underset{i}{arg}(a) - \underset{i}{arg}(b)$$

$$\Delta j = \underset{j}{arg}(a) - \underset{j}{arg}(b)$$

$$U_{\Delta i, \Delta j} = U_{\Delta i, \Delta j} + 1$$

wherein

$U_{\Delta i, \Delta j}$ is an accumulation matrix specifying the number of characteristic features of the left (L) half of the image which are shifted by ($\Delta i, \Delta j$) with respect to the characteristic features of the right (R) half of the image.

Therefore, each characteristic feature of the first half of the frame is compared with each characteristic feature of the other half of the frame. The comparison is performed by calculating the difference in coordinates ($\Delta i, \Delta j$) of the features. When corresponding features of a 3D LR-type signal are compared with each other (i.e. $A_L$ with $B_R$, $B_L$ with $A_L$, $C_L$ with $E_R$, $D_L$ with $C_R$, $E_L$ with $D_R$, $F_L$ with $G_R$ and $G_L$ with $F_R$), the comparison will result in the same difference in coordinates, where the horizontal axis coordinate difference ($\Delta i$) will be equal to the amount of the horizontal shift between the two pictures and the vertical axis coordinate difference ($\Delta j$) will be usually equal to zero, as the LR-type image is usually not shifted in the vertical direction. A comparison between non-corresponding features (e.g. $A_L$ with $A_R$, $C_R$, $D_R$, $E_R$, $F_R$, $G_R$, $B_L$ with $B_R$, $C_R$, $D_R$, $E_R$, $F_R$, $G_R$, etc) will result in various values. Fig. 10 presents exemplary plot of accumulation matrix ($U_{\Delta i, \Delta j}$) for an exemplary stereoscopic frame (with a larger number of characteristic features than that shown in Fig. 8, such as points of frame borders and other possible characteristic points within the objects). The value of each element of the matrix ($U_{\Delta i, \Delta j}$) indicates the number of characteristic features that are shifted by the coordinate difference indicated by the particular element ($\Delta i, \Delta j$). The peak value specifies the most frequent coordinate difference, i.e. corresponds substantially to the amount of shift between the left and right half of the frame. If the peak value is higher by a predefined threshold than a mean value for all values of the accumulation matrix - this indicates that the frame is a stereoscopic frame, and since the accumulation matrix was created by comparing the characteristic features for left half of the frame with the characteristic features for the right half of the frame, this indicated an LR-type frame. The predefined threshold may require the peak value to be e.g. at least 2 times higher than the mean value.

Alternatively, the value by which the element of the matrix ($U_{\Delta i, \Delta j}$) is increased when a particular coordinate difference is detected can be a number different than 1, such as a number proportional to the strength of characteristics of a given characteristic points compared. Therefore, comparisons between the most characteristic points may result in a greater increase of the value of the element of the matrix ($U_{\Delta i, \Delta j}$) than comparisons between the least characteristic points.

Moreover, simultaneously with increasing the element of the accumulation matrix ($U_{\Delta i, \Delta j}$) corresponding to a particular coordinate difference, the neighboring elements of the accumulation matrix can be increased as well by a smaller amount, for example:

-    the element of coordinates ($\Delta i, \Delta j$) can be increased by 1.
-    the elements of coordinates ($\Delta i$-1, $\Delta j$) ($\Delta i$+1, $\Delta j$), ($\Delta i$, $\Delta j$-1), ($\Delta i$, $\Delta j$+1) can be increased by a smaller amount, such as 0,5
-    the elements of coordinates ($\Delta i$-1, $\Delta j$-1), ($\Delta i$-1, $\Delta j$+1), ($\Delta i$+1, $\Delta j$-1), ($\Delta i$+1, $\Delta j$+1) can be increased by a smaller amount, such as 0,1.

Increasing the values of the neighboring elements ($\Delta i$-1, $\Delta j$) ($\Delta$+1, $\Delta j$), ($\Delta i$, $\Delta j$-1), ($\Delta i$, $\Delta j$+1), ($\Delta i$-1, $\Delta j$-1), ($\Delta i$-1, $\Delta j$+1), ($\Delta i$+1, $\Delta j$-1), ($\Delta i$+1, $\Delta j$+1) by smaller amount than the main element ($\Delta i, \Delta j$) allows to decrease the level of noise within the accumulation matrix.

The resolution of the accumulation matrix ($U_{\Delta i, \Delta j}$) can be adapted to the available memory and the processing power of the system.

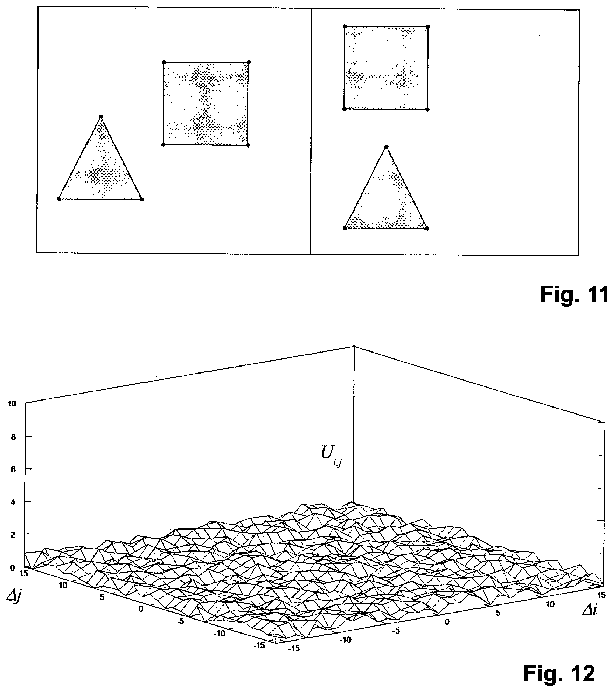

In turn, Fig. 11 presents an exemplary mono frame divided in half, wherein the characteristic features of the left half are not shifted by a common coordinate difference versus the characteristic features of the right half. Fig. 12 presents an exemplary plot of the accumulation matrix ($U_{\Delta i, \Delta j}$) for an exemplary mono frame (with a larger number of features than that shown in Fig. 11,, such as points of frame borders and other possible characteristic points within the objects), wherein there is no distinguishable peak, and therefore there is no correlation between characteristic features.

In step 406 the set of characteristic features for the top frame half is compared with the set for the bottom frame half according to the algorithm:

$$\forall V_{ij} = 0$$

$$\forall a \in T:$$

$$\forall b \in B:$$

$$\Delta i = \underset{i}{arg}(a) - \underset{i}{arg}(b)$$

$$\Delta j = \underset{j}{arg}(a) - \underset{j}{arg}(b)$$

$$V_{\Delta i, \Delta j} = V_{\Delta i, \Delta j} + 1$$

The accumulation matrix $V_{\Delta i, \Delta i}$ is calculated in a way equivalent to step 405.

Finally, in step 407 the frame is classified as a 2D mono frame, or a 3D LR-type frame or TB-type frame. The classification may be a hard classification, wherein the frame is classified as a mono frame if no peaks were detected, as a LR-type frame if a peak has been detected in step 405 for the accumulation matrix $U_{\Delta i, Aj}$ and as a TB-type frame if a peak has been detected in step 406 for the accumulation matrix $V_{\Delta i, Aj}$. In case the peaks were detected both in steps 405 and 406, the peak of the highest value can be selected to indicate the frame type.

The classification can be also a soft classification, providing a probability coefficient indicating each frame type, calculated as:

$$p_{LR} = 1 - \frac{m_{LR}}{x_{LR}}$$

$$p_{TB} = 1 - \frac{m_{TB}}{x_{TB}}$$

$$p_{2D} = \frac{\min(x_{LR}, x_{TB})}{\max(x_{LR}, x_{TB})}$$

wherein

$m_{LR}$ is the mean value for the $U_{\Delta i, \Delta j}$ accumulation matrix
$x_{LR}$ is the peak value for the $U_{\Delta i, \Delta j}$ accumulation matrix
$m_{TB}$ is the mean value for the $V_{\Delta i, \Delta j}$ accumulation matrix
$x_{TB}$ is the peak value for the $V_{\Delta i, \Delta j}$ accumulation matrix

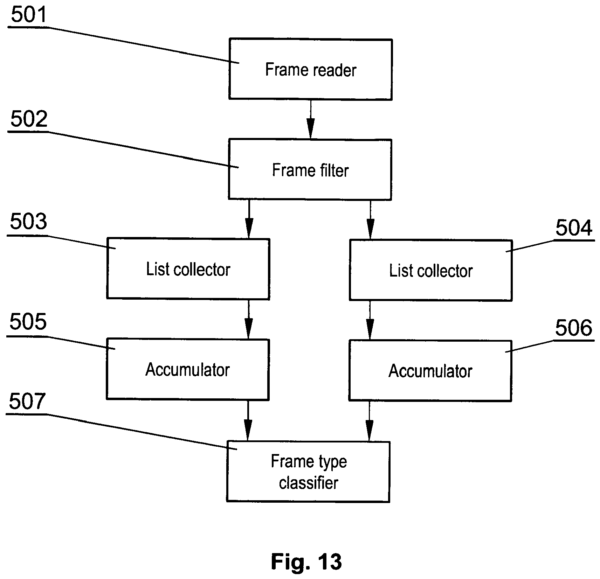

Fig. 13 presents an exemplary embodiment of the frame type detector 203 according to the invention. The detector comprises a frame reader 501 configured to receive a video frame. A frame filter 502 is configured to filter the video frame to enhance characteristic features ($A_L$-$G_L$, $A_R$-$G_R$) of the contents of the video frame, in a way equivalent to step 402. At least one list collector 503, 504 is configured to create a list of coordinates of at least part of the characteristic features for a first half of the frame ($A_L$-$G_L$) and the other half ($A_R$-$G_R$) of the frame, in a way equivalent to steps 403, 404. The list collector 403 may create lists for the left and right half of the frame and the list collector 404 may create lists for the top and bottom half of the frame. At least one accumulator 505, 506 configured to compare the coordinates (i,j) of the characteristic features of the list for the first half of the frame with the coordinates (i,j) of the characteristic features of the other half of the frame to obtain an accumulation matrix ($U_{\Delta i, \Delta j}$, $V_{\Delta i, \Delta j}$) having a peak value ($x_{LR}$, $x_{TB}$) specifying the most frequent coordinate difference and a mean value ($m_{LR}$, $m_{TB}$) specifying the mean coordinate difference, in a way equivalent to steps 405, 406. A frame type classifier 507 is configured to classify the frame as a stereoscopic frame if the peak value ($x_{LR}$, $x_{TB}$) exceeds the mean value ($m_{LR}$, $m_{TB}$) by a predefined threshold and as a monoscopic frame otherwise, in a way equivalent to step 407.

The frame type detector 203 can form a part of a multi-component system, in which a plurality of different frame type detectors are used, each configured to analyze the frame using a different algorithm configured to output a type coefficient indicative of a probability that the frame is of a 2D or 3D type, wherein the type coefficients from the frame type detectors are received by a controller configured to generate a predicted frame type indicator based on the received type coefficients.

In case the system according to the invention is embedded in a video display unit, the determined frame type can be used to select the method of processing the signal to be displayed. In case the system according to the invention is embedded in a video decoder, such as a television set-top box, the determined frame type can be used to select the method of processing the signal to be passed to a display unit, for example converting a 2D signal to a 3D format in case the display unit is set to receive 3D video signals.

It can be easily recognized, by one skilled in the art, that the aforementioned system and method for determining video frame type may be performed and/or controlled by one or more computer programs. Such computer programs are typically executed by utilizing the computing resources of a processing unit which can be embedded within various video signal receivers, such as personal computers, personal digital assistants, cellular telephones, receivers and decoders of digital television, video display units or the like. The computer programs can be stored in a non-volatile memory, for example a flash memory or in a volatile memory, for example RAM and are executed by the processing unit. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein. Accordingly, the scope of protection is not limited to the preferred embodiments described in the specification, but is only limited by the claims that follow.

**Claims**

1. A computer-implemented method for determining a video frame type, comprising the steps of:

   - receiving a video frame,
   - filtering the video frame to enhance values of pixels of characteristic features ($A_L$-$G_L$, $A_R$-$G_R$) of the contents of the video frame compared to the values of pixels that do not belong to characteristic features,
   - creating a list of coordinates of at least part of the characteristic features for a first half ($A_L$-$G_L$) of the filtered video frame and the other half ($A_R$-$G_R$) of the filtered video frame,
   - comparing the coordinates (i,j) of each of the characteristic features of the list for the first half of the frame with the coordinates (i,j) of each of the characteristic features of the other half of the frame to obtain an accumulation matrix ($U_{\Delta i, \Delta j}$, $V_{\Delta i, \Delta j}$) specifying the number of characteristic features of the first half of the image which are shifted by ($\Delta i, \Delta j$) with respect to the characteristic features of the other half of the image, the accumulation matrix ($U_{\Delta i, \Delta j}$, $V_{\Delta i, \Delta j}$) having a peak value ($x_{LR}$, $x_{TB}$) specifying the most frequent coordinate difference and a mean value ($m_{LR}$, $m_{TB}$) specifying the mean coordinate difference,
   - classifying the frame as a stereoscopic frame if the peak value ($x_{LR}$, $x_{TB}$) exceeds the mean value ($m_{LR}$, $m_{TB}$) by a predefined threshold and as a monoscopic frame otherwise, wherein the predefined threshold equals at least the mean value.

2. The method according to claim 1, wherein the first half is the left half, the other half is the right half and the frame is classified as a LR-type stereoscopic frame if the peak value ($x_{LR}$) exceeds the mean value ($m_{LR}$) by a threshold value.

3. The method according to claim 1, wherein the first half is the top half, the other half is the bottom half and the frame is classified as a TB-type stereoscopic frame if the peak value ($x_{TB}$) exceeds the mean value ($m_{TB}$) by a threshold value.

4. The method according to claims 2 and 3, **characterized by** creating a first set of lists of coordinates for the left half and the right half of the frame, creating a second set of lists of coordinates for the top half and the bottom half of the frame, obtaining a peak value $(x_{LR}, x_{TB})$ and a mean value $(m_{LR}, m_{TB})$ for the first set and for the second set and classifying the frame as a LR-type stereoscopic frame, a TB-type stereoscopic frame or a monoscopic frame.

5. The method according to any of previous claims, further comprising the step of calculating a probability of a stereoscopic frame as a difference between 1 and a ratio of the mean value $(m_{LR}, m_{TB})$ and the peak value $(x_{LR}, x_{TB})$.

6. The method according to any of previous claims, wherein the characteristic features are individual pixels of the video frame having a value different from the color of the neighboring pixels.

7. The method according to any of previous claims, **characterized by** creating a list of coordinates of a predetermined number of the most characteristic features.

8. The method according to any of previous claims, **characterized by** creating a list of coordinates of the characteristic features having a parameter larger than a predetermined threshold value.

9. The method according to any of previous claims, **characterized by** creating a list of coordinates of a predetermined number of randomly-selected characteristic features.

10. The method according to any of previous claims, **characterized by** obtaining the accumulation matrix $(U_{\Delta i,\Delta j}, V_{\Delta i,\Delta j})$ by increasing the value of the element $(\Delta i, \Delta j)$ of the matrix $(U_{\Delta i,\Delta j}, V_{\Delta i,\Delta j})$ corresponding to the detected difference $(\Delta i, \Delta j)$ between the compared coordinates $(i,j)$ of the characteristic features of the list for the first half of the frame with the coordinates $(i,j)$ of the characteristic features of the other half of the frame.

11. The method according to claim 10, further comprising the step of increasing the value of the neighboring elements $(\Delta i-1, \Delta j)$ $(\Delta i+1, \Delta j)$, $(\Delta i, \Delta j-1)$, $(\Delta i, \Delta j+1)$, $(\Delta i-1, \Delta j-1)$, $(\Delta i-1, \Delta j+1)$, $(\Delta i+1, \Delta j-1)$, $(\Delta i+1, \Delta j+1)$ of the main element $(\Delta i, \Delta j)$ corresponding to the detected difference $(\Delta i, \Delta j)$ by a value smaller than the value of increase of the main element $(\Delta i, \Delta j)$.

12. The method according to claim 1, wherein the values of pixels of characteristic features $(A_L-G_L, A_R-G_R)$ of the contents of the video frame are enhanced by enhancing the value of pixels which differ from their neighboring left, right, top and bottom pixels and zeroing the pixels which have the same value as their neighboring pixels.

13. A computer program comprising program code means for performing all the steps of the computer-implemented method according to any of claims 1-12 when said program is run on a computer.

14. A computer readable medium storing computer-executable instructions performing all the steps of the computer-implemented method according to any of claims 1-12 when executed on a computer.

15. A system for determining a video frame type, comprising a frame reader (501) configured to receive a video frame,

    - a frame filter (502) configured to filter the video frame to enhance values of pixels of characteristic features $(A_L-G_L, A_R-G_R)$ of the contents of the video frame compared to the values of pixels that do not belong to characteristic features,
    - a list collector (503, 504) configured to create a list of coordinates of at least part of the characteristic features for a first half $(A_L-G_L)$ of the filtered video frame and the other half $(A_R-G_R)$ of the filtered video frame,
    - an accumulator (505, 506) configured to compare the coordinates $(i,j)$ of each of the characteristic features of the list for the first half of the frame with the coordinates $(i,j)$ of each of the characteristic features of the other half of the frame to obtain an accumulation matrix $(U_{\Delta i,\Delta j}, V_{\Delta i,\Delta j})$ specifying the number of characteristic features of the first half of the image which are shifted by $(\Delta i, \Delta j)$ with respect to the characteristic features of the other half of the image, the accumulation matrix $(U_{\Delta i,\Delta j}, V_{\Delta i,\Delta j})$ having a peak value $(x_{LR}, x_{TB})$ specifying the most frequent coordinate difference and a mean value $(m_{LR}, m_{TB})$ specifying the mean coordinate difference,
    - a frame type classifier (507) configured to classify the frame as a stereoscopic frame if the peak value $(x_{LR}, x_{TB})$ exceeds the mean value $(m_{LR}, m_{TB})$ by a predefined threshold and as a monoscopic frame otherwise, wherein the predefined threshold equals at least the mean value.

**16.** The system according to claim 15, comprising a pair of list collectors (503, 504) configured to create a first set of lists of coordinates for the left half and the right half of the frame, creating a second set of lists of coordinates for the top half and the bottom half of the frame, and a pair of accumulators (505, 506) configured to obtain a peak value ($x_{LR}$, $x_{TB}$) and a mean value ($m_{LR}$, $m_{TB}$) for the first set and for the second set, wherein the frame type classifier (507) is configured to classify the frame as a LT-type stereoscopic frame, a TB-type stereoscopic frame or a monoscopic frame.

**17.** The system according to claim 15, wherein the frame filter is configured to enhance the values of pixels of characteristic features ($A_L$-$G_L$, $A_R$-$G_R$) of the contents of the video frame by enhancing the value of pixels which differ from their neighboring left, right, top and bottom pixels and zeroing the pixels which have the same value as their neighboring pixels.

**Patentansprüche**

**1.** Computerimplementiertes Verfahren zum Bestimmen eines Typs eines Video-Frames, die folgenden Schritte umfassend:

- Empfangen eines Video-Frames,
- Filtern des Video-Frames, um Werte von Pixeln von charakteristischen Merkmalen ($A_L$-$G_L$, $A_R$-$G_R$) der Inhalte des Video-Frames verglichen mit den Werten von Pixeln, die nicht zu charakteristischen Merkmalen gehören, zu verbessern,
- Erstellen einer Liste an Koordinaten von zumindest einem Teil der charakteristischen Merkmale für eine erste Hälfte ($A_L$-$G_L$) des gefilterten Video-Frames und die andere Hälfte ($A_R$-$G_R$) des gefilterten Video-Frames,
- Vergleichen der Koordinaten (i,j) von jedem der charakteristischen Merkmale der Liste für die erste Hälfte des Frames mit den Koordinaten (i,j) von jedem der charakteristischen Merkmale der anderen Hälfte des Frames, um eine Akkumulationsmatrix ($U_{\Delta i,\Delta j}$, $V_{\Delta i,\Delta j}$) zu erhalten, welche die Anzahl an charakteristischen Merkmalen der ersten Hälfte des Bildes spezifiziert, die in Bezug auf die charakteristischen Merkmale der anderen Hälfte des Bildes um ($\Delta i, \Delta j$) verschoben sind, wobei die Akkumulationsmatrix ($U_{\Delta i,\Delta j}$, $V_{\Delta i,\Delta j}$) einen Spitzenwert ($x_{LR}$, $x_{TB}$), der die häufigste Koordinatendifferenz spezifiziert, und einen Mittelwert ($m_{LR}$, $m_{TB}$), der die Mittelkoordinatendifferenz spezifiziert, aufweist,
- Klassifizieren des Frames als einen stereoskopischen Frame, wenn der Spitzenwert ($x_{LR}$, $x_{TB}$) den Mittelwert ($m_{LR}$, $m_{TB}$) um eine zuvor definierte Schwelle überschreitet, und andernfalls als einen monoskopischen Frame, wobei die zuvor definierte Schwelle zumindest dem Mittelwert gleicht.

**2.** Verfahren nach Anspruch 1, wobei die erste Hälfte die linke Hälfte ist, die andere Hälfte die rechte Hälfte ist und der Frame als ein stereoskopischer LR-Typ-Frame klassifiziert wird, wenn der Spitzenwert ($x_{LR}$) den Mittelwert ($m_{LR}$) um einen Schwellenwert überschreitet.

**3.** Verfahren nach Anspruch 1, wobei die erste Hälfte die obere Hälfte ist, die andere Hälfte die untere Hälfte ist und der Frame als ein stereoskopischer TB-Typ-Frame klassifiziert wird, wenn der Spitzenwert ($x_{TB}$) den Mittelwert ($m_{TB}$) um einen Schwellenwert überschreitet.

**4.** Verfahren nach Anspruch 2 und 3, **gekennzeichnet durch** das Erstellen eines ersten Satzes an Listen an Koordinaten für die linke Hälfte und die rechte Hälfte des Frames, Erstellen eines zweiten Satzes an Listen an Koordinaten für die obere Hälfte und die untere Hälfte des Frames, Erhalten eines Spitzenwertes ($x_{LR}$, $x_{TB}$) und eines Mittelwertes ($m_{LR}$, $m_{TB}$) für den ersten Satz und für den zweiten Satz und Klassifizieren des Frames als ein stereoskopischer LR-Typ-Frame, ein stereoskopischer TB-Typ-Frame oder ein monoskopischer Frame.

**5.** Verfahren nach einem der vorhergehenden Ansprüche, ferner umfassend den Schritt des Berechnens einer Wahrscheinlichkeit eines stereoskopischen Frames als eine Differenz zwischen 1 und einem Verhältnis des Mittelwertes ($m_{LR}$, $m_{TB}$) und des Spitzenwertes ($x_{LR}$, $x_{TB}$).

**6.** Verfahren nach einem der vorhergehenden Ansprüche, wobei die charakteristischen Merkmale individuelle Pixel des Video-Frames sind, die einen Wert aufweisen, der sich von der Farbe der benachbarten Pixel unterscheidet.

**7.** Verfahren nach einem der vorhergehenden Ansprüche, **gekennzeichnet durch** das Erstellen einer Liste an Koordinaten einer zuvor festgelegten Anzahl der charakteristischsten Merkmale.

8. Verfahren nach einem der vorhergehenden Ansprüche, **gekennzeichnet durch** das Erstellen einer Liste an Koordinaten der charakteristischen Merkmale, die einen Parameter aufweisen, der größer als ein zuvor festgelegter Schwellenwert ist.

9. Verfahren nach einem der vorhergehenden Ansprüche, **gekennzeichnet durch** das Erstellen einer Liste an Koordinaten einer zuvor festgelegten Anzahl an willkürlich ausgewählten charakteristischen Merkmalen.

10. Verfahren nach einem der vorhergehenden Ansprüche, **gekennzeichnet durch** das Erhalten der Akkumulationsmatrix ($U_{\Delta i,\Delta j}$, $V_{\Delta i,\Delta j}$) durch Erhöhen des Wertes des Elements ($\Delta i,\Delta j$) der Matrix ($U_{\Delta i,\Delta j}$, $V_{\Delta i,\Delta j}$) entsprechend der erfassten Differenz ($\Delta i,\Delta j$) zwischen den verglichenen Koordinaten (i,j) der charakteristischen Merkmale der Liste für die erste Hälfte des Frames mit den Koordinaten (i,j) der charakteristischen Merkmale der anderen Hälfte des Frames.

11. Verfahren nach Anspruch 10, ferner umfassend den Schritt des Erhöhens des Wertes der benachbarten Elemente ($\Delta i$-1, $\Delta j$) ($\Delta i$+1, $\Delta j$), ($\Delta i$, $\Delta j$-1), ($\Delta i$, $\Delta j$+1), ($\Delta i$- 1, $\Delta j$-1), ($\Delta i$-1, $\Delta j$+1), ($\Delta i$+1, $\Delta j$-1), ($\Delta i$+1, $\Delta j$+1) des Hauptelements ($\Delta i,\Delta j$) entsprechend der erfassten Differenz ($\Delta i,\Delta j$) um einen Wert, der kleiner ist als der Wert der Erhöhung des Hauptelements ($\Delta i,\Delta j$).

12. Verfahren nach Anspruch 1, wobei die Werte an Pixeln an charakteristischen Merkmalen ($A_L$-$G_L$, $A_R$-$G_R$) der Inhalte des Video-Frames verbessert werden, indem der Wert der Pixel verbessert wird, die sich von ihren benachbarten linken, rechten, oberen und unteren Pixeln unterscheiden und die Pixel auf Null gesetzt werden, welche den gleichen Wert wie ihre benachbarten Pixel aufweisen.

13. Computerprogramm, Programmcodemittel zum Durchführen aller Schrittes des computerimplementierten Verfahrens nach einem der Ansprüche 1-12 umfassend, wenn das Programm auf einem Computer ausgeführt wird.

14. Computerlesbares Medium, das computerausführbare Anweisungen speichert, die alle Schritte des computerimplementierten Verfahrens gemäß einem der Ansprüche 1-12 durchführen, wenn sie auf einem Computer ausgeführt werden.

15. System zum Bestimmen eines Typs eines Video-Frames, umfassend einen Frame-Reader (501), der konfiguriert ist, um einen Video-Frame zu empfangen,

   - einen Frame-Filter (502), der konfiguriert ist, um den Video-Frame zu filtern, um Werte von Pixeln von charakteristischen Merkmalen ($A_L$-$G_L$, $A_R$-$G_R$) der Inhalte des Video-Frames verglichen mit den Werten von Pixeln, die nicht zu charakteristischen Merkmalen gehören, zu verbessern,
   - einen Listensammler (503, 504), der konfiguriert ist, um eine Liste an Koordinaten von zumindest einem Teil der charakteristischen Merkmale für eine erste Hälfte ($A_L$-$G_L$) des gefilterten Video-Frames und die andere Hälfte ($A_R$-$G_R$) des gefilterten Video-Frames zu erstellen,
   - einen Akkumulator (505, 506), der konfiguriert ist, um die Koordinaten (i,j) von jedem der charakteristischen Merkmale der Liste für die erste Hälfte des Frames mit den Koordinaten (i,j) von jedem der charakteristischen Merkmale der anderen Hälfte des Frames zu vergleichen, um eine Akkumulationsmatrix ($U_{\Delta i,\Delta j}$, $V_{\Delta i,\Delta j}$) zu erhalten, welche die Anzahl an charakteristischen Merkmalen der ersten Hälfte des Bildes spezifiziert, die um ($\Delta i,\Delta j$) in Bezug auf die charakteristischen Merkmale der anderen Hälfte des Bildes verschoben sind, wobei die Akkumulationsmatrix ($U_{\Delta i,\Delta j}$, $V_{\Delta i,\Delta j}$) einen Spitzenwert ($x_{LR}$, $x_{TB}$), der die häufigste Koordinatendifferenz spezifiziert, und einen Mittelwert ($m_{LR}$, $m_{TB}$), der die Mittelkoordinatendifferenz spezifiziert, aufweist,
   - einen Frame-Typ-Klassifizierer (507), der konfiguriert ist, um den Frame als einen stereoskopischen Frame zu klassifizieren, wenn der Spitzenwert ($x_{LR}$, $x_{TB}$)den Mittelwert ($m_{LR}$, $m_{TB}$) um eine zuvor definierte Schwelle überschreitet, und ansonsten als einen monoskopischen Frame, wobei die zuvor definierte Schwelle zumindest dem Mittelwert gleicht.

16. System nach Anspruch 15, umfassend ein Paar an Listensammlern (503, 504), die konfiguriert sind, um einen ersten Satz an Listen an Koordinaten für die linke Hälfte und die rechte Hälfte des Frames zu erstellen, einen zweiten Satz an Listen an Koordinaten für die obere Hälfte und die untere Hälfte des Frames zu erstellen, und ein Paar an Akkumulatoren (505, 506), die konfiguriert sind, um einen Spitzenwert ($x_{LR}$, $x_{TB}$) und einen Mittelwert ($m_{LR}$, $m_{TB}$) für den ersten Satz und für den zweiten Satz zu erhalten, wobei der Frame-Typ-Klassifizierer (507) konfiguriert ist, um den Frame als einen stereoskopischen LT-Typ-Frame, einen stereoskopischen TB-Typ-Frame oder einen monoskopischen Frame zu klassifizieren.

**17.** System nach Anspruch 15, wobei der Frame-Filter konfiguriert ist, um die Werte von Pixeln von charakteristischen Merkmalen ($A_L$-$G_L$, $A_R$-$G_R$) der Inhalte des Video-Frames zu verbessern, indem der Wert von Pixeln verbessert wird, die sich von ihren benachbarten linken, rechten, oberen und unteren Pixeln unterscheiden und die Pixel auf Null gesetzt werden, welche den gleichen Wert wie ihre benachbarten Pixel aufweisen.

**Revendications**

**1.** Procédé mise en oeuvre par ordinateur permettant de déterminer un type d'image vidéo, comprenant les étapes de :

- réception d'une image vidéo,
- filtrage de l'image vidéo pour augmenter les valeurs des pixels des éléments caractéristiques ($A_L$-$G_L$, $A_R$-$G_R$) du contenu de l'image vidéo par rapport aux valeurs des pixels qui n'appartiennent pas à aux éléments caractéristiques,
- création d'une liste de coordonnées d'au moins une partie des éléments caractéristiques pour un première moitié ($A_L$-$G_L$) de l'image vidéo filtrée et pour l'autre moitié ($A_R$-$G_R$) de l'image vidéo filtrée,
- comparaison des coordonnées (i,j) de chacun des éléments caractéristiques de la liste pour la première moitié de l'image avec les coordonnées (i,j) de chacun des éléments caractéristiques de l'autre moitié de l'image pour obtenir une matrice d'accumulation ($U_{\Delta i,\Delta j}$, $V_{\Delta i,\Delta j}$) spécifiant le nombre d'éléments caractéristiques de la première moitié de l'image qui sont décalés de ($\Delta i, \Delta j$) par rapport aux éléments caractéristiques de l'autre moitié de l'image, ladite matrice d'accumulation ($U_{\Delta i,\Delta j}$, $V_{\Delta i,\Delta j}$) possédant une valeur de crête ($x_{LR}$, $x_{TB}$) spécifiant la différence de coordonnée la plus fréquente et une valeur moyenne ($m_{LR}$, $m_{TB}$) spécifiant la différence de coordonnées moyenne,
- classification de l'image comme une image stéréoscopique si la valeur de crête ($x_{LR}$, $x_{TB}$) est supérieure à la valeur moyenne ($m_{LR}$, $m_{TB}$) par un seuil prédéfini et comme une image monoscopique autrement, ledit seuil prédéfini étant supérieure ou égale à la valeur moyenne.

**2.** Procédé selon la revendication 1, ladite première moitié étant la moitié gauche, ladite autre moitié étant la moitié droite et ladite image étant classée comme une image stéréoscopique de type LR si la valeur de crête ($x_{LR}$) est supérieure à la valeur moyenne ($m_{LR}$) par une valeur seuil.

**3.** Procédé selon la revendication 1, ladite première moitié étant la moitié supérieure, ladite autre moitié étant la moitié inférieure et ladite image étant classée comme une image stéréoscopique de type supérieur/inférieur (TB) si la valeur de crête ($x_{TB}$) est supérieure à la valeur moyenne ($m_{TB}$) par une valeur seuil.

**4.** Procédé selon les revendications de 2 et 3, **caractérisé par** la création d'un premier ensemble de listes de coordonnées pour la moitié gauche et la moitié droite de l'image, la création d'un second ensemble de listes de coordonnées pour la moitié supérieure et la moitié inférieure de l'image, l'obtention d'une valeur de crête ($x_{LR}$, $x_{TB}$) et une valeur moyenne ($m_{LR}$, $m_{TB}$) pour le premier ensemble et pour le second ensemble et la classification de l'image comme une image stéréoscopique de type LR, une image stéréoscopique de type TB ou une image monoscopique.

**5.** Procédé selon l'une quelconque des revendications précédentes, comprenant en outre l'étape de calcul d'une probabilité d'une image stéréoscopique sous la forme d'une différence entre 1 et un rapport de la valeur moyenne ($m_{LR}$, $m_{TB}$) sur la valeur de crête ($x_{LR}$, $x_{TB}$).

**6.** Procédé selon l'une quelconque des revendications précédentes, lesdits éléments caractéristiques étant des pixels individuels de l'image vidéo possédant une valeur différente de la couleur des pixels voisins.

**7.** Procédé selon l'une quelconque des revendications précédentes, **caractérisé par** la création d'une liste de coordonnées d'un nombre prédéfini d'éléments les plus caractéristiques.

**8.** Procédé selon l'une quelconque des revendications précédentes, **caractérisé par** la création d'une liste de coordonnées d'éléments caractéristiques possédant un paramètre supérieur à une valeur de seuil prédéfinie.

**9.** Procédé selon l'une quelconque des revendications précédentes, **caractérisé par** la création d'une liste de coordonnées d'un nombre prédéfini d'éléments caractéristiques sélectionnés arbitrairement.

**10.** Procédé selon l'une quelconque des revendications précédentes, **caractérisé par** l'obtention de la matrice d'accu-

mulation ($U_{\Delta i,\Delta j}$, $V_{\Delta i,\Delta j}$) en augmentant la valeur de l'élément ($\Delta i,\Delta j$) de la matrice ($U_{\Delta i,\Delta j}$, $V_{\Delta i,\Delta j}$) correspondant à la différence détectée ($\Delta i,\Delta j$) entre le coordonnées comparées (i,j) des éléments caractéristiques de la liste pour la première moitié de l'image et les coordonnées (i,j) des éléments caractéristiques de l'autre moitié de l'image.

11. Procédé selon la revendication 10, comprenant en outre l'étape d'augmentation de la valeur des éléments voisins ($\Delta i-1,\Delta j$) ($\Delta i+1,\Delta j$) ($\Delta i,\Delta j-1$), ($\Delta i,\Delta j+1$), ($\Delta i-1,\Delta j-1$), ($\Delta i-1,\Delta j+1$), ($\Delta i+1,\Delta j-1$), ($\Delta i+1,\Delta j+1$) de l'élément principal ($\Delta i,\Delta j$) correspondant à la différence détectée ($\Delta i,\Delta j$) par une valeur inférieure à la valeur de l'augmentation de l'élément principal ($\Delta i,\Delta j$).

12. Procédé selon la revendication 1, lesdites valeurs des pixels des éléments caractéristiques ($A_L$-$G_L$, $A_R$-$G_R$) du contenu de l'image vidéo étant augmentées en augmentant la valeur des pixels qui diffèrent des pixels voisins de gauche, de droite, supérieur et inférieur et en mettant à zéro les pixels qui possèdent la même valeur que leurs pixels voisins.

13. Programme informatique comprenant un moyen de code de programme permettant d'effectuer toutes les étapes du procédé mis en oeuvre par ordinateur selon l'une quelconque des revendications 1 à 12 lorsque ledit programme est exécuté sur un ordinateur.

14. Support lisible par ordinateur stockant des instructions exécutables par ordinateur effectuant toutes les étapes du procédé mis en oeuvre par ordinateur selon l'une quelconque des revendications 1 à 12 lorsqu'il est exécuté sur un ordinateur.

15. Système permettant de déterminer un type d'image vidéo, comprenant un lecteur d'image (501) conçu pour recevoir une image vidéo,

    - un filtre d'image (502) conçu pour filtrer l'image vidéo afin d'augmenter les valeurs des pixels des éléments caractéristiques ($A_L$-$G_L$, $A_R$-$G_R$) du contenu de l'image vidéo comparées aux valeurs des pixels qui n'appartiennent pas à des éléments caractéristiques,
    - un collecteur de liste (503, 504) conçu pour créer une liste de coordonnées d'au moins une partie des éléments caractéristiques pour une première moitié ($A_L$-$G_L$) de l'image vidéo filtrée et pour l'autre moitié ($A_R$-$G_R$) de l'image vidéo filtrée,
    - un accumulateur (505, 506) conçu pour comparer les coordonnées (i,j) de chacun des éléments caractéristiques de la liste pour la première moitié de l'image avec les coordonnées (i,j) de chacun des éléments caractéristiques de l'autre moitié de l'image afin d'obtenir une matrice d'accumulation ($U_{\Delta i,\Delta j}$, $V_{\Delta i,\Delta j}$) spécifiant le nombre d'éléments caractéristiques de la première moitié de l'image qui sont décalés de ($\Delta i,\Delta j$) par rapport aux éléments caractéristiques de l'autre moitié de l'image, ladite matrice d'accumulation ($U_{\Delta i,\Delta j}$, $V_{\Delta i,\Delta j}$) possédant une valeur de crête ($x_{LR}$, $x_{TB}$) spécifiant la différence de coordonnées la plus fréquente et une valeur moyenne ($m_{LR}$, $m_{TB}$) spécifiant la différence de coordonnées moyenne,
    - un classeur de type d'image (507) conçu pour classer l'image comme une image stéréoscopique si la valeur de crête ($x_{LR}$, $x_{TB}$) est supérieure à la valeur moyenne ($m_{LR}$, $m_{TB}$) par un seuil prédéfini et comme une image monoscopique dans le cas contraire, ledit seuil prédéfini étant supérieur ou égal à la valeur moyenne.

16. Système selon la revendication 15, comprenant une paire de collecteurs de liste (503, 504) conçus pour créer un premier ensemble de listes de coordonnées pour la moitié gauche et la moitié droite de l'image, créer un second ensemble de listes de coordonnées pour la moitié supérieure et la moitié inférieure de l'image et une paire d'accumulateurs (505, 506) conçue pour obtenir une valeur de crête ($x_{LR}$, $x_{TB}$) et une valeur moyenne ($m_{LR}$, $m_{TB}$) pour le premier ensemble et pour le second ensemble, ledit classeur de type d'image (507) étant conçu pour classer l'image comme une image stéréoscopique de type LT, une image stéréoscopique de type TB ou une image monoscopique.

17. Système selon la revendication 15, ledit filtre d'image étant conçu pour augmenter les valeurs des pixels des éléments caractéristiques ($A_L$-$G_L$, $A_R$-$G_R$) du contenu de l'image vidéo en augmentant la valeur des pixels qui diffèrent de leurs pixels voisins de gauche, de droite, supérieur et inférieur et en mettant à zéro les pixels possédant la même valeur que leurs pixels voisins.

111

**Fig. 1A**

110

111

**Fig. 1B**

110

111

**Fig. 1C**

110

111

**Fig. 1D**

Fig. 2A

Fig. 2B

Fig. 2C

Fig. 2D

Fig. 2E

Fig. 2F

Fig. 2G

Fig. 2H

Fig. 3A

Fig. 3B

Fig. 3C

Fig. 3D

Fig. 3E

Fig. 3F

Fig. 3G

Fig. 3H

**Fig. 4**

**Fig. 5**

301
Discard
color information

302
Scale-down frame

303
Determine
non-active regions

304
Discard non-active
regions

**Fig. 6**

401

Receive
input frame

402

Filter to enhance
characteristic features

403

Create L, R lists
of characteristic features

404

Create T, B lists
of characteristic features

405

Calculate accumulation
coefficient $U_{i,j}$

406

Calculate accumulation
coefficient $V_{i,j}$

407

Classify
the frame

**Fig. 7**

**Fig. 8**

Features of left frame half

1: $\left(\underset{i}{arg}(A_L), \underset{j}{arg}(A_L)\right)$

2: $\left(\underset{i}{arg}(B_L), \underset{j}{arg}(B_L)\right)$

3: $\left(\underset{i}{arg}(C_L), \underset{j}{arg}(C_L)\right)$

4: $\left(\underset{i}{arg}(D_L), \underset{j}{arg}(D_L)\right)$

5: $\left(\underset{i}{arg}(E_L), \underset{j}{arg}(E_L)\right)$

6: $\left(\underset{i}{arg}(F_L), \underset{j}{arg}(F_L)\right)$

7: $\left(\underset{i}{arg}(G_L), \underset{j}{arg}(G_L)\right)$

Features of right frame half

1: $\left(\underset{i}{arg}(A_R), \underset{j}{arg}(A_R)\right)$

2: $\left(\underset{i}{arg}(B_R), \underset{j}{arg}(B_R)\right)$

3: $\left(\underset{i}{arg}(C_R), \underset{j}{arg}(C_R)\right)$

4: $\left(\underset{i}{arg}(D_R), \underset{j}{arg}(D_R)\right)$

5: $\left(\underset{i}{arg}(E_R), \underset{j}{arg}(E_R)\right)$

6: $\left(\underset{i}{arg}(F_R), \underset{j}{arg}(F_R)\right)$

7: $\left(\underset{i}{arg}(G_R), \underset{j}{arg}(G_R)\right)$

**Fig. 9**

**Fig. 10**

**Fig. 11**

**Fig. 12**

501

Frame reader

502

Frame filter

503

List collector

504

List collector

505

Accumulator

506

Accumulator

507

Frame type
classifier

**Fig. 13**

**EP 2 477 407 B1**

**Patent documents cited in the description**

- US 20090009508 A
- WO 2010014973 A

- US 2010182404 A1